# EUROPEAN PATENT SPECIFICATION

(11) **EP 1 892 786 B1**
(45) Date of publication and mention of the grant of the patent: **25.01.2012**
(21) Application number: 06757272.7
(22) Date of filing: 13.06.2006
(51) Int. Cl.: H01M 8/04, H01M 8/10

(54) **METHANOL FUEL CELL CARTRIDGE**
METHANOLBRENNSTOFFZELLENKASSETTE
CARTOUCHE POUR PILE À COMBUSTIBLE AU MÉTHANOL

(30) Priority: 17.06.2005 JP 2005177376
(43) Date of publication of application: 27.02.2008
(73) Proprietor: Toyo Seikan Kaisha, Ltd., Tokyo 100-8522 (JP); Kabushiki Kaisha Toshiba, tokyo 1058001 (JP)
(72) Inventor: IMODA, Daisuke c/o TOYO SEIKAN KAISHA, LTD., Yokohama-shi, Kanagawa 230-0001 (JP); YOSHINO, Kyoko c/o TOYO SEIKAN KAISHA, LTD., Yokohama-shi, Kanagawa 230-0001 (JP); TAKIZAWA, Yumiko, K. K. TOSHIBA, Yokohama-shi, Kanagawa 235-8522 (JP)
(74) Representative: TBK
(86) International application number: PCT/JP2006/311787
(87) International publication number: WO 2006/134889

(56) References cited:
- WO-A1-2005/004268
- JP-A- 2003 331 879
- JP-A- 2004 152 741
- JP-A- 2005 011 613
- JP-A- 2005 116 210
- JP-A- 2005 317 250
- JP-A- 2006 127 893
- US-A1- 2004 126 643
- US-A1- 2005 116 190

## Description

### TECHNICAL FIELD

The present invention relates to a portable cartridge for a methanol fuel cell suitably used as a fuel tank, a refill container, or the like for a direct methanol fuel cell (DMFC).

### BACKGROUND ART

A direct methanol fuel cell (DMFC) employing methanol as a fuel has attracted attention as a power source for a mobile device such as a laptop computer or a cell phone, and various types thereof are known (see Patent Documents 1 to 3, for example).
Patent Document 1: JP 2004-265872 A
Patent Document 2: JP 2004-259705 A
Patent Document 3: JP 2004-152741 A

For reduction in size of a cell in each of those fuel cells, reduction in size and weight of a fuel tank (cartridge) storing methanol as a fuel is required, and various cartridges are proposed (see Patent Documents 3 and 4, for example).
Patent Document 4: JP 2004-155450 A

However, when a cartridge storing methanol contains a resin material, there are disadvantages that low-molecular-weight organic compounds such as antioxidants, lubricants, etc. contained in the resin material are eluted in methanol as impurities; an electromotive voltage of a fuel cell is lowered; therefore continuous generation of power over a prolonged period of time is difficult.
In contrast, in order to prevent deterioration of the power generation performance of a fuel cell due to such impurities, there are proposed techniques in which a filter is provided; impurities contained in a fuel or oxidant gas supplied to a fuel cell are collected with an impurity collector containing a chelating agent; and the like (e.g., see Patent Document 5). When such a device is added to a fuel cell, there arise problems that reduction in size and weight of a fuel cell is difficult to achieve and the cost also increases.
Patent Document 5: JP 2004-227844 A

US 2005/116190 (A1) describes a fuel cell supply for a fuel cell having an outer casing, a liner member containing methanol, and a valve component comprising a valve body member and a slidable body member disposed inside the valve body member. The liner member, the valve body member and the slidable body member are made from at least two different materials and wherein at least one of the members compatible with methanol. Hence, each component can be selected from material(s) that is substantially optimal for its function in the fuel supply.

WO 2005004268 (A1) relates to a fuel container for storing fuel to be supplied to a fuel cell comprising a container main body having a sealed construction, an inner container constituted by a flexible bag installed in the container main body and adapted to internally store the fuel, and a valve mechanism, wherein all the component members that make contact with the fuel (F) are made of nonmetallic material.

US 2004126643 (A1) describes a fuel reservoir for a liquid fuel cell particularly useful for portable electronic devices or for a reformer, including (a) a container defining a volume for holding a liquid fuel; (b) a wicking structure positioned within the volume and into which at least one portion of the liquid fuel wicks and from which said liquid fuel subsequently may be metered, such as by pumping; (c) a retainer to hold the wicking structure in a desired orientation within the container; and (d) an outlet for the liquid fuel that is in communication with the wicking structure.

### DISCLOSURE OF THE INVENTION

### PROBLEMS TO BE SOLVED BY THE INVENTION

Therefore, the present invention aims to provide a cartridge for a methanol fuel cell, which allows continuous operation over a prolonged period of time without deteriorating power generation performance of a methanol fuel cell, and which attains reduction in size and weight, as well as a low cost.

### MEANS FOR SOLVING THE PROBLEMS

In order to solve the above-mentioned problems, the present invention adopts the following structures of 1 to 7.
1. A cartridge for a methanol fuel cell, comprising: an inner resin layer containing a resin having such a property that, when a film of the resin is immersed in methanol at 60°C for 7 days and then the methanol is diluted to twice with distilled water at room temperature to give a liquid, the liquid shows a light transmittance of 10% or higher at 300 nm.
2. A cartridge for a methanol fuel cell according to Item 1, in which the inner resin layer contains a resin selected from low-density polyethylene, linear low-density polyethylene, high-density polyethylene, polypropylene-based polymer, cyclic polyolefin copolymer, polyamide, fluorocarbon polymer, polyethylene terephthalate, and polyethylenenaphthalate.
3. A cartridge for a methanol fuel cell according to Item 2, in which a resin forming the inner resin layer contains a resin selected from high-density polyethylene polymerized by a Phillips method using a chrome oxide catalyst; or linear low-density polyethylene, high-density polyethylene, and a polypropylene-based polymer which are polymerized by a polymerization method using a metallocene catalyst.
4. A cartridge for a methanol fuel cell according to any one of Items 1 to 3, further comprising a methanol barrier layer containing a cyclic polyolefin copolymer.
5. A cartridge for a methanol fuel cell according to any one of Items 1 to 4, further comprising a main layer containing a polyolefin-based resin including a regenerated resin.
6. A cartridge for a methanol fuel cell according to any one of Items 1 to 5, further comprising a valve mechanism for preventing leakage at a pouring portion.
7. A cartridge for a methanol fuel cell according to any one of Items 1 to 6, in which the cartridge for a methanol fuel cell is installed in an outer case formed of a rigid material.

### EFFECT OF THE INVENTION

According to the present invention, the cartridge for a methanol fuel cell can be obtained at low cost, which allows continuous operation over a prolonged period of time without deterioration in the power generation performance of the methanol fuel cell. The cartridge for a methanol fuel cell of the present invention can achieve reduction in size and weight, and thus can be preferably used as a fuel tank or a refill container for DMFC.

### BEST MODE FOR CARRYING OUT THE INVENTION

### (Light transmittance)

In the present invention, a cartridge for a methanol fuel cell has an inner resin layer containing a resin having such a property that when a film of the resin is immersed in methanol at 60°C for 7 days, and then the methanol is diluted twice in terms of a volume ratio with distilled water at room temperature to give a liquid, the liquid shows a light transmittance of 10% or higher at 300 nm.
This light transmittance refers to a value of a liquid, measured at a wavelength of 300 nm using a spectrophotometer U-3310 manufactured by Hitachi High-Technologies Corporation. The liquid is obtained by immersing eight resin films measuring 15 mm in length, 40 mm in width, and 1 mm in thickness in 50 mL of methanol (for precise analysis: 99.8% methanol content) manufactured by Wako Pure Chemical Industries. Ltd., at 60°C for 7 days, and then diluting the methanol twice in terms of a volume ratio with distilled water at room temperature.

There is no limitation on the resin forming the inner resin layer of the cartridge for a methanol fuel cell of the present invention insofar as it has the light transmittance described above. It is preferable to use a resin selected from low-density polyethylene, linear low-density polyethylene, high-density polyethylene, polypropylene-based polymer, cyclic polyolefin copolymer, polyamide, fluorocarbon polymer, polyethylene terephthalate, and polyethylenenaphthalate. Those resins can be used alone or in combination of two or more.
Mentioned as particularly preferable resins are high-density polyethylenes polymerized by the Phillips method using a chrome oxide catalyst; or linear low-density polyethylenes, high-density polyethylenes, and the polypropylene-based polymers which are polymerized by a polymerization method using a metallocene catalyst.

There is no limitation on the layer structure of the cartridge for a methanol fuel cell of the present invention insofar as the resin layer described above is provided on the inner layer of the cartridge. For example, a cartridge having a monolayer structure containing a resin serving as an inner resin layer can be obtained. Moreover, a cartridge having a multilayer structure containing at least one resin layer or a layer formed of another material on the outside of the above-described inner resin layer can be obtained.
In the case of a cartridge having a multilayer structure, it is preferable to have a methanol barrier layer, particularly a methanol barrier layer whose methanol vapor transmittance coefficient is 15 µg·mm/m²·hr or lower at 40°C, and a main layer containing polyolefin-based resin including a regenerated resin containing fins, a defective, etc., which are generated when the cartridge is manufactured.

Examples of a material used for forming such a methanol barrier layer include a cyclic olefin-based resin and a polyester-based resin. Those resins may be used unoriented, or may arbitrarily be uniaxially oriented or biaxially oriented.
A cyclic olefin-based polymer (COP) or a copolymer of ethylene and a cyclic olefin (COC: cycloolefin copolymer), known as a material used for forming a bottle, can be used as the cyclic olefin-based resin. COC includes a copolymer substantially and entirely formed of COC and a copolymer blended with other polyolefins.
A non-crystalline or low-crystalline copolymer produced from 10 to 50 mol%, in particular, 15 to 48 mol% of a cyclic olefin and the balance of ethylene and having a glass transition point of 5 to 200°C, in particular, 40 to 190°C is preferably used as COC. Further, a copolymer obtained by substituting a part of ethylene forming a copolymer with a cyclic olefin for another α-olefin having about 3 to 20 carbon atoms, such as propylene, 1-butene, 1-pentene, 1-hexene, 1-octene, 3-methyl-1-pentene, or 1-decene, may be used.

An alicyclic hydrocarbon compound having an ethylenic unsaturated bond and a bicyclo ring is preferred as the cyclic olefin. Specific examples of the cyclic olefin forming a repeating unit with a norbornane structure include: 8-ethyl-tetracyclo[4.4.0.1.2,5.12,5.17,10]-dodeca-3-ene; 8-ethylidene-tetracyclo[4.4.0.1.2,5.17,10]-dodeca-3-ene; and 8-methyl-tetracyclo[4.4.0.1.2,5.17,10]-dodeca-3-ene. Examples of a cyclic olefin forming a repeating unit without norbornane structure include: 5-ethylidene-bicyclo[2,2,1]hepto-2-ene; 5-ethyl-bicyclo[2,2,1]hepto-2-ene; and tetracyclo[7.4.0.02,7.110,13]-trideca-2,4,6,11-tetraene.

Examples of the polyester resin to be used include: a polyester homopolymer and a polyester copolymer such as polyethylene terephthalate (PET), polybutylene terephthalate (PBT), and polyethylene naphthalate (PEN). The polyester homopolymer and the polyester copolymer are each obtained through a reaction of: a dicarboxylic acid component such as terephthalic acid, isophthalic acid, p-β-oxyethoxy benzoic acid, naphthalene 2, 6-dicarboxylic acid, diphenoxyethane-4,4'-dicarboxylic acid,5-sodiumsulfoisophthalic acid, adipic acid, sebacic acid, or an alkyl ester derivative thereof, or a polyvalent carboxylic acid component such as trimellitic acid; and a glycol component such as ethylene glycol, propylene glycol, 1,4-butanediol, neopentyl glycol, 1, 6-hexylene glycol, cyclohexane dimethanol, an ethylene oxide adduct of bisphenol A, diethylene glycol, or triethylene glycol. Further, a homopolymer or a copolymer such as polylactic acid which is obtained through a reaction of a hydroxycarboxylic acid may also be used. One kind of polyester may be used alone, or two or more kinds thereof may be blended and used.

Another example of the polyester resin is a high-density polyester resin such as polyglycolic acid resin or the like having a density of 1.5 or more.
The polyglycolic acid is a polymer of a hydroxyacetic acid, and is a polyester having one carbon atom in an ester bond as described in US 2, 676, 945, for example. The polyglycolic acid has a compact crystalline structure compared with that of a normal thermoplastic polyester, thus has a high-density, and exhibits lower water vapor permeability than those of other polyesters. Not only a homopolymer of the polyglycolic acid but also a copolymer having a part of glycolic acid substituted for another copolymer component may be used.

Resins each having an inorganic coating film may be used as another material used for forming the methanol impermeable layer. Examples of the inorganic coating film include: various carbon coating films such as a diamond-like carbon coating film and a modified carbon coating film; a titanium oxide coating film; a silicon oxide (silica) coating film; an aluminum oxide (alumina) coating film; a ceramics coating film; a silicon carbide coating film; and a silicon nitride coating film. Resins having those coating films are not particularly limited, and any one of thermoplastic resins to be generally used for producing plastic containers may be used.

Examples of a preferable resin having the inorganic coating film include a silica vapor deposited polyester film, an alumina vapor deposited polyester film, a silica vapor deposited nylon film, an alumina vapor deposited nylon film, an alumina vapor deposited polypropylene film, a carbon film vapor deposited polyester film, anda carbon film vapor deposited nylon film. Further, the examples thereof include a co-vapor deposited film prepared through co-vapor deposition of alumina and silica on a base film such as a polyester film or a nylon film. However, the resin is not limited to the examples described above.
A resin layer having an inorganic coating film formed on a film-like or sheet-like resin surface in advance through chemical vapor deposition, plasma vapor deposition, sputtering, or the like may be used as a resin layer having an inorganic coating film.

In the case where the cartridge for a methanol fuel cell of the present invention has a multilayer structure, resins each formed of a thermoplastic resin having or not having heat sealing property may be used as a material used for forming an intermediate layer, an outer layer, or the like of the container.
Examples of such a thermoplastic resin include: polyolefins such as crystalline polypropylene, a crystalline propylene/ethylene copolymer, crystalline polybutene-1, crystalline poly4-methylpentene-1, low-, medium-, or high-density polyethylene, an ethylene/vinyl acetate copolymer (EVA), a saponified EVA, an ethylene/ethyl acrylate copolymer (EEA), and an ion crosslinked olefin copolymer (ionomer); an aromatic vinyl copolymer such as polystyrene or a styrene/butadiene copolymer; a halogenated vinyl polymer such as polyvinyl chloride or a vinylidene chloride resin; a polyacrylic resin; a nitrile polymer such as an acrylonitrile/styrene copolymer or an acrylonitrile/styrene/butadiene copolymer; polyesters such as polyethylene terephthalate and polytetramethylene terephthalate; various polycarbonates; fluorocarbon polymer; and polyacetals such as polyoxymethylene. Those thermoplastic resins may be used alone orincombinationoftwoormore. Further, those thermoplastic resins may be used by mixing various additives.

An adhesive resin is disposed between layers of the container having a multilayer structure as required. Such an adhesive resin is not particularly limited, and any one of a polyurethane-based resin, an acid-modified ethylene/α-olefin copolymer, a vinyl acetate-based resin, and the like generally used for production of a plastic container may be used.
A resin obtained through graft modification of an ethylene/α-olefin copolymer prepared through copolymerization of ethylene and an α-olefin having 10 or less carbon atoms such as propylene, 1-butene, 1-pentene, 1-heptene, or 1-octene with an unsaturated carboxylic acid such as acrylic acid, methacrylic acid, maleic acid, fumaric acid, itaconic acid, or crotonic acid or an anhydride thereof is preferably used as the acid-modified ethylene/α-olefin copolymer. A graft modification rate of the adhesive resin is preferably about 0.05 to 5wt%. Those acid-modified ethylene/α-olefin copolymers may be used alone or in combination of two or more. Further, an ethylene/α-olefin copolymer modified in advance with an acid in high concentrations, and a polyolefin-based resin such as unmodified low-density polyethylene, an ethylene/vinyl acetate copolymer, an ethylene/α-olefin copolymer, or high-density polyethylene may be mixed, and the thus-obtained blended product adjusted to have an acid modification rate of about 0.05 to 5 wt% as a whole resin may be used as an adhesive resin.

The resin layer used for forming the cartridge for a methanol fuel cell of the present invention may contain an additive such as a lubricant formed of a higher fatty amide such as amide oleate, amide stearate, amide erucate, or amide behenate; a crystalline nucleating agent generally added to a plastic container; a UV absorber; an antistatic agent; a colorant such as a pigment; an antioxidant; or a neutralizer.

A shape of the cartridge for a methanol fuel cell of the present invention is not limited, and the cartridge may have various shapes including a hollow container such as a bottle, a cartridge, or a cup; a flat pouch; and a standing pouch.
As a method of producing a container, a general method may be employed. For example, the hollow container such as a bottle, a cartridge, or a cup may be produced by a method including injection molding, blow molding such as direct blow or biaxial orientation blow molding, or vacuum/pressure forming, but biaxial orientation blow molding is preferably employed. The pouches such as a flat pouch and a standing pouch can be produced by heat sealing a multilayer film having a heat sealing resin layer as an innermost layer. Those containers are each preferably provided with means for forming a pouring portion such as a screw cap or a spout. Further, the pouring portion of the cartridge for a methanol fuel cell is particularly preferably provided with a valve mechanism for preventing leakage.

Dimensions of the cartridge for a methanol fuel cell of the present invention are not particularly limited. In the case where the cartridge is used for a fuel tank or a refill container for DMFC to be used as a power source for a laptop computer, a cell phone, or the like, a content volume is preferably 1 to 500 ml, and particularly preferably about 10 to 200 ml.

The cartridge for a methanol fuel cell of the present invention can be produced as a container having a monolayer or multilayer structure. The obtained container may be installed in an outer case formed of a rigid material such as metal or fiber reinforced plastic. In the case where the container has a multilayer structure, preferred examples of the layer structure include in the order given from an inner layer of the container: high-density polyethylene (HDPE)/adhesive resin (Ad)/cyclic polyolefin copolymer (COC)/Ad/HDPE; HDPE/HDPE+regnerated resin (Reg)/Ad/COC/Ad/HDPE; low-density polyethlene (LDPE)/Ad/COC/Ad/HDPE; LDPE/HDPE+Reg/Ad/COC/Ad/HDPE; LDPE/Ad/COC/Ad/polypropylene (PP); LDPE/Ad/COC/Ad/PP+Reg/PP; metallocene catalyst polymerized linear low-density polyethylene (m-LLDPE)/Ad/COC/Ad/PP; m-LLDPE/Ad/COC/Ad/PP+Reg/PP; HDPE/Ad/COC/Ad/HDPE+Reg/HDPE; HDPE/Ad/COC/Ad/PP; HDPE/PP+Reg/Ad/COC/Ad/PP; HDPE/Ad/COC/Ad/PP+Reg/PP; HDPE+m-LLDPE/Ad/COC/Ad/HDPE+m-LLDPE; HDPE+m-LLDPE/HDPE+Reg/Ad/COC/Ad/HDPE+m-LLDPE; HDPE+m-LLDPE/Ad/COC/Ad/HDPE+Reg/HDPE+m-LLDPE; HDPE+m-LLDPE/Ad/COC/Ad/PP; HDPE+m-LLDPE/PP+Reg/Ad/COC/Ad/PP; and HDPE+m-LLDPE/Ad/COC/Ad/PP+Reg/PP. (Herein, "A+B"referstoaresin containing a resin A and a resin B.)

### EXAMPLES

Hereinafter, the present invention will be described in more detail by way of examples, but the present invention is not limited to the following specific examples. In the following examples, the light transmittance of a resin film and the power generation performance of a methanol fuel cell were measured as follows.

### (Light transmittance)

Eight resin films measuring 15 mm in length, 40 mm in width, and 1 mm in thickness were immersed in 50 mL of methanol (for precise analysis: 99. 8% methanol content) manufactured by Wako Pure Chemical Industries. Ltd. , at 60°C for 7 days, and then the methanol was diluted twice in terms of a volume ratio with distilled water at room temperature, thereby obtaining a sample liquid. The light transmittance of the sample liquid was measured at a wavelength of 300 nm using a spectrophotometer U-3310 manufactured by Hitachi High-Technologies Corporation.

### (Power generation performance)

A fuel cell cartridge was charged with 50 mL of methanol (for precise analysis: 99.8% methanol content) manufactured by Wako Pure Chemical Industries. Ltd., sealed with a cap equipped with a packing made of tetrafluoroethylene, and stored at 60°C for 168 hours. While using the stored methanol as fuel, the time required for the electromotive voltage to fall by 20% relative to the initial electromotive voltage at the time of power generation was measured using a micro fuel cell tester. When the time was 100 hours or less, it was judged to be "X"; when the time was more than 100 hours and up to 500 hours, it was judged to be "O", and when the time over 500 hours, it was judged to be "⊚".

### (Example 1)

As a resin forming a container, an LDPE (additive free) having a light transmittance of 93%, an MFR at 190°C of 0.5 g /10 min, and a density of 0.929 g/cm³ was used. A parison obtained through extrusion of this resin by a conventional method was subjected to direct blow molding with a rotary blow molding machine, to thereby produce an LDPE monolayer bottle-shaped fuel cell cartridge having a thickness of 500 µm, a full content volume of 60 mL, and a mass of 10 g.

### (Example 2)

The same fuel cell cartridge having a monolayer structure containing a m-LLDPE was produced following the procedure of Example 1 except using, as a resin forming a container, the m-LLDPE (additive free) having a light transmittance of 87%, an MFR at 190°C of 0.9 g/10 min, and a density of 0.908 g/cm³.

### (Example 3)

The same fuel cell cartridge having a monolayer structure containing a z-HDPE was produced following the procedure of Example 1 except using, as a resin forming a container, a high-density polyethylene (z-HDPE: containing, as additives, 150 ppm of Irganox 1010, 200 ppm of Irgafos 168, 2000 ppm of Armoslip 310, and 1000 ppm of calcium stearate) polymerized using a Ziegler catalyst having a light transmittance of 26%, an MFR at 190°C of 0.25 g/10 min, and a density of 0.951 g/cm³.

### (Example 4)

The same fuel cell cartridge having a monolayer structure containing a p-HDPE was produced following the procedure of Example 1 except using, as a resin forming a container, a high-density polyethylene (p-HDPE: additive free) polymerized using a Phillips catalyst having a light transmittance of 94%, an MFR at 190°C of 0.3 g/10 min, and a density of 0.946 g/cm³.

### (Example 5)

The same fuel cell cartridge having a monolayer structure containing a m-HDPE was produced following the procedure of Example 1 except using, as a resin forming a container, a high-density polyethylene(m-HDPE:additive free)polymerized using a metallocene catalyst having a light transmittance of 97%, an MFR at 190°C of 0.35 g/10 min, and a density of 0.959 g/cm³.

### (Example 6)

The same fuel cell cartridge having a monolayer structure containing a z-random PP was produced following the procedure of Example 1 except using, as a resin forming a container, a propylene random copolymer (z-random PP: containing, as additives, 2000 ppm of Irganox 1010, 1000 ppm of amide erucate, 1000 ppm of calcium stearate, and 1000 ppm of hydrotalsite) polymerized using a Ziegler catalyst having a light transmittance of 10%, an MFR at 230°C of 1.7 g/10 min, and a density of 0.9 g/cm³

### (Example 7)

The same fuel cell cartridge having a monolayer structure containing a m-random PP was produced following the procedure of Example 1 except using, as a resin forming a container, a propylene random copolymer (m-random PP: containing, as an additive, 200 ppm of Irganox 1010) polymerized using a metallocene catalyst having a light transmittance of 82%, an MFR at 230°C of 2.0 g/10 min, and a density of 0.9 g/cm³.

### (Example 8)

The same fuel cell cartridge having a monolayer structure containing a nylon 6/66 copolymer was produced following the procedure of Example 1 except using, as a resin forming a container, a nylon 6/66 copolymer (nylon 66 content of 15 mol%: containing, as an additive, 300 ppm of calcium stearate) having a light transmittance of 83%, a relative viscosity (96% H₂SO₄ solution) of 4.05, and a melting point of 196°C.

### (Example 9)

The same fuel cell cartridge having a monolayer structure containing a fluororesin was produced following the procedure of Example 1 except using, as a resin forming a container, a fluororesin (tetrafluoroethylene perfluoroalkyl vinyl-ether copolymer: additive free) having a light transmittance of 99%, an MFR at 372°C under a load of 5 kgf of 2 g/10 min, and a melting point of 305°C.

### (Comparative Example 1)

The same fuel cell cartridge having a monolayer structure containing a z-LLHDPE was produced following the procedure of Example 1 except using, as a resin forming a container, a linear low-density polyethylene (z-LLDPE: containing, as additives, 330 ppm of Irganox 1010, 670 ppm of Irgafos 168) polymerized using a Ziegler catalyst having a light transmittance of 8%, an MFR at 190°C of 0.75 g/10 min, and a density of 0.922 g/cm³.

### (Comparative Example 2)

The same fuel cell cartridge having a monolayer structure containing a z-block PP was produced following the procedure of Example 1 except using, as a resin forming a container, a propylene block copolymer (z-block PP: containing, as additives, 5400 ppm of Irganox 1010, 1000 ppm of Irgafos 168, 2300 ppm of Electrostripper EA, 540 ppm of Tinuvin 326, and 1600 ppm of calcium stearate) polymerized using a Ziegler catalyst having a light transmittance of 5%, an MFR at 230°C of 1.1 g/10 min, and a density of 0.9 g/cm³.

Each of the fuel cell cartridges obtained in Examples 1 to 9 and Comparative Examples 1 and 2 described above was subjected to a power generation performance test, and the results are shown in Table 1.

**[Table 1]**

| | Power generation performance test | |
|---|---|---|
| | Judgement | Time required for electromotive voltage to fall by 20% (hr) |
| Example 1 | ⊚ | >500 |
| Example 2 | ○ | 450 |
| Example 3 | ○ | 290 |
| Example 4 | ⊚ | >500 |
| Example 5 | ⊚ | >500 |
| Example 6 | ○ | 110 |
| Example 7 | ○ | 420 |
| Example 8 | ○ | 440 |
| Example 9 | ⊚ | >500 |
| Comparative Example 1 | x | 25 |
| Comparative Example 2 | x | 9 |

In the following Examples, a resin, which was difficult to subject to a direct blow molding when it had a monolayer structure due to the low melt tension, was used as an inner layer, and a parison was produced through co-extrusion by a conventional method by using multiple multilayer dies. The obtained parison was subjected to direct blow molding with a rotary blow molding machine, to thereby produce a bottle-shaped fuel cell cartridge having a three-layer structure of two different resin layers (total thickness: 550 µm) .

### (Example 10)

Using as a resin forming an inner layer of a cartridge, an ethylene/tetracyclo dodecene copolymer of COC (ethylene content of 82 mol%: containing, as an additive, 3000 ppm of calcium stearate) having a light transmittance of 93% and an MFR at 260°C of 15 g/10 min; using, as an adhesive resin, maleic anhydride-modified polypropylene having 60 meq/100 g of carbonyl groups; and using, as a resin forming an outer layer, the z-block PP used in Comparative Example 2, a parison was produced through co-extrusion by a conventional method. The obtained parison was subjected to direct blow molding with a rotary blow molding machine, to thereby produce a fuel cell cartridge having a three-layer structure of two different resin layers of COC (thickness: 150 µm) /Ad (thickness: 20 µm) /z-block PP (thickness: 330 µm) in the order given from an inner layer and having a full content volume of 60 mL and a mass of 10 g.

### (Comparative Example 3)

By following the procedure of Example 10 except using, as a resin forming an inner layer, an amorphous polyethylene terephthalate copolymer (PETG: additive free) having a light transmittance of 7%, an intrinsic viscosity (IV) of 0.75 dl/g, and a density of 1.27 g/cm³, a fuel cell cartridge having a three-layer structure of two different resin layers of PETG (thickness: 150 µm)/Ad (thickness: 20 µm)/z-block PP (thickness: 330 µm) in the order given from an inner layer and having a full content volume of 60 mL and a mass of 10 g was produced.

Each of the fuel cell cartridges obtained in Example 10 and Comparative Example 3 described above was subjected to a power generation performance test, and the results are shown in Table 2.

**[Table 2]**

| | Power generation performance test | |
|---|---|---|
| | Judgement | Time required for electromotive voltage to fall by 20% (hr) |
| Example 10 | ○ | 390 |
| Comparative Example 3 | x | 13 |

In the following examples, a preform was obtained from a polyester resin through injection molding. This preform was subjected to biaxial orientation blow molding at 2.6 times in a longitudinal direction and 2.2 times in a lateral direction with a biaxial orientation blow molding machine (Nissei ASB-50H, manufactured by NISSEI ASB MACHINE CO., LTD.), to thereby produce a monolayer bottle-shaped fuel cell cartridge.

### (Example 11)

Used as a polyester resin forming a preform was polyethylene terephthalate (PET: additive free), which was polymerized using a germanium catalyst, having a light transmittance of 91%, an intrinsic viscosity (IV) of 0.75 dl/g, a density of 1.40 g/cm³, and a melting point of 252°C. The obtained preform was subjected to biaxial orientation blow molding, to thereby produce a monolayer fuel cell cartridge having a full content volume of 60 mL, a mass of 10 g, and an average thickness of 0.45 mm.

### (Example 12)

By following the procedure of Example 11 except using, as a polyester resin, polyethylene naphthalate (PEN: additive free), which was polymerized using an antimony catalyst, having a light transmittance of 94%, an intrinsic viscosity (IV) of 0.70 dl/g, a density of 1.33 g/cm³, and a melting point of 265°C, a monolayer fuel cell cartridge having a full content volume of 60 mL, a mass of 10 g, and an average thickness of 0.45 mm was produced.

### (Example 13)

By following the procedure of Example 11 except using, as a polyester resin, a resin in which the PET used in Example 11 and the PEN used in Example 12 were blended in such a manner as to have a PET content of 30 wt%, a monolayer fuel cell cartridge having a full content volume of 60 mL, a mass of 10 g, and an average thickness of 0.45 mm was produced.

Each of the fuel cell cartridges obtained in Examples 11 to 13 was subjected to a power generation performance test, and the results are shown in Table 3.

**[Table 3]**

| | Power generation performance test | |
|---|---|---|
| | Judgement | Time required for electromotive voltage to fall by 20% (hr) |
| Example 11 | ○ | 310 |
| Example 12 | ○ | 370 |
| Example 13 | ○ | 340 |

In the following examples, a parison was produced through co-extrusion by a conventional method by using multiple multilayer dies using a COC having a methanol barrier property in any one of layers of the multilayer cartridge. The obtained parison was subjected to direct blow molding with a rotary blow molding machine, to thereby produce a multilayer bottle-shaped fuel cell cartridge having a total thickness of 500 µm.

### (Example 14)

Using the p-HDPE used in Example 4 as a resin forming the innermost layer and the outermost layer; using the same p-HDPE containing a regenerated resin as a resin forming a main layer; using the COC used in Example 10 as a resin forming an intermediate layer; and using the adhesive resin used in Example 10 as an adhesive resin layer, a parison was produced through co-extrusion by a conventional method. The obtained parison was subjected to direct blow molding with a rotary blow molding machine, to thereby produce a multilayer fuel cell cartridge having a six-layer structure of four different resin layers of p-HDPE (thickness: 100 µm)/Ad (thickness: 20 µm)/COC (thickness: 150 µm)/Ad (thickness: 20 µm)/p-HDPE+Reg (thickness: 135 µm)/p-HDPE (thickness: 75 µm) in the order given from an inner layer and having a full content volume of 60 mL and a mass of 10 g.

### (Example 15)

By following the procedure of Example 14 except using the LDPE used in Example 1 as a resin forming the innermost layer; using the z-block PP used in Comparative Example 2 as a resin forming the outermost layer; and using a z-block PP containing a regenerated resin as a resin forming a main layer, a multilayer fuel cell cartridge having a six-layer structure of five different resin layers of LDPE (thickness: 100 µm) /Ad (thickness: 20 µm) /COC (thickness: 150 µm) /Ad (thickness: 20 µm) /z-block PP+Reg (thickness: 135 µm) / z-block PP (thickness: 75 µm) in the order given from an inner layer and having a full content volume of 60 mL and a mass of 10 g was produced.

### (Example 16)

By following the procedure of Example 15 except using the m-LLDPE used in Example 2 as a resin forming the innermost layer, a multilayer fuel cell cartridge having a six-layer structure of five different resin layers of m-LLDPE (thickness: 100 µm)/Ad (thickness: 20 µm)/COC (thickness: 150 µm)/Ad (thickness: 20 µm)/z-block PP+Reg (thickness: 135 µm)/z-block PP (thickness: 75 µm) in the order given from an inner layer and having a full content volume of 60 mL and a mass of 10 g was produced.

### (Example 17)

By following the procedure of Example 15 except using as a resin forming the innermost layer a resin in which 70 wt% of the p-HDPE used in Examples 4 and 30 wt% of the m-LLDPE used in Example 2 were blended, a multilayer fuel cell cartridge having a six-layer structure of five different resin layers of p-HDPE (70 wt%) +m-LLDPE (30 wt%) (thickness: 100 µm)/Ad (thickness: 20 µm)/COC (thickness: 150 µm)/Ad (thickness: 20 µm)/z-block PP+Reg (thickness: 135 µm)/z-block PP (thickness: 75 µm) in the order given from an inner layer and having a full content volume of 60 mL and a mass of 10 g was produced.

Each of the fuel cell cartridges obtained in Examples 14 to 17 and Examples 1 to 3 and 10 described above was subjected to a power generation performance test and the following methanol reduction test, and the results are shown in Table 4.

### (Methanol reduction test)

A fuel cell cartridge was charged with 50 mL of methanol (for precise analysis: 99. 8% methanol content) manufactured by Wako Pure Chemical Industries. Ltd., sealed with a cap equipped with a packing made of tetrafluoroethylene, and stored at 40°C for 24 hours. Then, the weight of the fuel cell cartridge was measured, and the measured weight was defined as an initial weight (W₀).

After the initial weight was measured, the weight (W₁) of the cartridge that was further stored at 40°C for 14 days was measured, thereby obtaining a reduction value (W₀-W₁). Thus, the methanol reduction amount per day was calculated.

**[Table 4]**

| | Power generation performance test | | Methanol reduction degree |
|---|---|---|---|
| | Judgement | Time required for electromotive voltage to fall by 20% (hr) | (mg/day) |
| Example 1 | ⊚ | >500 | 30.6 |
| Example 2 | ○ | 450 | 35.7 |
| Example 3 | ○ | 290 | 11.6 |
| Example 10 | ○ | 390 | 5.0 |
| Example 14 | ⊚ | >500 | 3.9 |
| Example 15 | ⊚ | >500 | 6.7 |
| Example 16 | ○ | 340 | 5.9 |
| Example 17 | ⊚ | >500 | 4.5 |

## Claims

1. A cartridge for a methanol fuel cell, comprising:
an inner resin layer containing a resin having such a property that, when a film of the resin is immersed in methanol at 60°C for 7 days and then the methanol is diluted to twice with distilled water at room temperature to give a liquid, the liquid shows a light transmittance of 10% or higher at 300 nm.

2. A cartridge for a methanol fuel cell according to claim 1, wherein the inner resin layer contains a resin selected from low-density polyethylene, linear low-density polyethylene, high-density polyethylene, polypropylene-based polymer, cyclic polyolefin copolymer, polyamide, fluorocarbon polymer, polyethylene terephthalate, and polyethylenenaphthalate.

3. A cartridge for a methanol fuel cell according to claim 2, wherein a resin forming the inner resin layer contains a resin selected from high-density polyethylene polymerized by a Phillips method using a chrome oxide catalyst; or linear low-density polyethylene, high-density polyethylene, and a polypropylene-based polymer which are polymerized by a polymerization method using a metallocene catalyst.

4. A cartridge for a methanol fuel cell according to any one of claims 1 to 3, further comprising a methanol barrier layer containing a cyclic polyolefin copolymer.

5. A cartridge for a methanol fuel cell according to any one of claims 1 to 4, further comprising a main layer containing a polyolefin-based resin including a regenerated resin.

6. A cartridge for a methanol fuel cell according to any one of claims 1 to 5, further comprising a valve mechanism for preventing leakage at a pouring portion.

7. A cartridge for a methanol fuel cell according to any one of claims 1 to 6, wherein the cartridge for a methanol fuel cell is installed in an outer case formed of a rigid material.

## Patentansprüche

1. Kartusche für eine Methanolbrennstoffzelle, die umfasst:
eine innere Harzschicht, die ein Harz mit solch einer Eigenschaft enthält, dass, wenn ein Film des Harzes in Methanol bei 60°C für 7 Tage eingetaucht wird und dann das Methanol bei Raumtemperatur auf das Zweifache mit destilliertem Wasser verdünnt wird, um eine Flüssigkeit zu ergeben, die Flüssigkeit eine Lichtdurchlässigkeit von 10% oder höher bei 300 nm zeigt.

2. Kartusche für eine Methanolbrennstoffzelle nach Anspruch 1, wobei die innere Harzschicht ein Harz enthält, das aus Polyethylen von niedriger Dichte, linearem Polyethylen von niedriger Dichte, Polyethylen von hoher Dichte, Polypropylen-basierten Polymer, cyclischem Polyolefin-Copolymer, Polyamid, Fluorkohlenstoff-Polymer, PolyethylenTerephthalat und Polyethylen-Naphthalat ausgewählt ist.

3. Kartusche für eine Methanolbrennstoffzelle nach Anspruch 2, wobei ein Harz, das die innere Harzschicht bildet, ein Harz enthält, das aus Polyethylen von hoher Dichte, das durch ein Phillips-Verfahren unter Verwendung eines Chromoxidkatalysators polymerisiert ist; oder linearem Polyethylen von niedriger Dichte, Polyethylen von hoher Dichte und einem Polypropylen-basierten Polymer, welche durch ein Polymerisationsverfahren unter Verwendung eines Metallocenkatalysators polymerisiert sind, ausgewählt ist.

4. Kartusche für eine Methanolbrennstoffzelle nach einem der Ansprüche 1 bis 3, ferner umfassend eine Methanolbarriereschicht, die ein cyclisches Polyolefin-Copolymer enthält.

5. Kartusche für eine Methanolbrennstoffzelle nach einem der Ansprüche 1 bis 4, ferner umfassend eine Hauptschicht, die ein Polyolefin-basiertes Harz einschließlich eines regenerierten Harzes enthält.

6. Kartusche für eine Methanolbrennstoffzelle nach einem der Ansprüche 1 bis 5, ferner umfassend einen Ventilmechanismus zum Verhindern einer Leckage an einem Strömungsteil.

7. Kartusche für eine Methanolbrennstoffzelle nach einem der Ansprüche 1 bis 6, wobei die Kartusche für eine Methanolbrennstoffzelle in einem äußeren Behälter, der aus einem rigiden Material gebildet ist, installiert ist.

## Revendications

1. Cartouche pour une pile à combustible au méthanol, comprenant :
une couche de résine intérieure contenant une résine ayant une propriété selon laquelle, lorsqu'un film de la résine est immergé dans le méthanol à 60°C pendant 7 jours et qu'ensuite le méthanol est dilué deux fois avec de l'eau distillée à température ambiante pour donner un liquide, le liquide présente une transmission à la lumière de 10% ou plus à 300 nm.

2. Cartouche pour une pile à combustible au méthanol selon la revendication 1, dans laquelle la couche de résine intérieure contient une résine choisie dans le groupe constitué de polyéthylène basse densité, polyéthylène basse densité linéaire, polyéthylène haute densité, polymère à base de polypropylène, copolymère de polyoléfine cyclique, polyamide, polymère de fluorocarboné, polyéthylène téréphtalate, et polyéthylène naphthalate.

3. Cartouche pour une pile à combustible au méthanol selon la revendication 2, dans laquelle une résine constituant la couche de résine intérieure contient une résine choisie dans le groupe constitué de polyéthylène haute densité polymérisé par un procédé Phillips en utilisant un catalyseur d'oxyde de chrome ; ou de polyéthylène basse densité linéaire, polyéthylène haute densité, et de polymère à base de polypropylène qui sont polymérisés par un procédé de polymérisation en utilisant un catalyseur métallocène.

4. Cartouche pour une pile à combustible au méthanol selon l'une quelconque des revendications 1 à 3, comprenant en outre une couche barrière de méthanol contenant un copolymère de polyoléfine cyclique.

5. Cartouche pour une pile à combustible au méthanol selon l'une quelconque des revendications 1 à 4, comprenant en outre une couche principale contenant une résine à base de polyoléfine contenant une résine régénérée.

6. Cartouche pour une pile à combustible au méthanol selon l'une quelconque des revendications 1 à 5, comprenant en outre un mécanisme de soupape pour empêcher les fuites au niveau d'une partie de déversement.

7. Cartouche pour une pile à combustible au méthanol selon l'une quelconque des revendications 1 à 6, dans laquelle la cartouche pour pile à combustible au méthanol est installée dans un boîtier extérieur constitué d'un matériau rigide.
